# EUROPEAN PATENT APPLICATION

(11) **EP 4 779 916 A1**
(43) Date of publication of application: **22.07.2026**
(21) Application number: 26151765.0
(22) Date of filing: 14.01.2026
(51) Int. Cl.: H04L 1/1829

(54) **FEEDBACK MECHANISM FOR RECEIVER INTERNAL ERRORS IN WIRELESS LAN SYSTEMS**

(30) Priority: 17.01.2025 US 202563746622 P; 02.07.2025 US 202519258415
(71) Applicant: Avago Technologies International Sales Pte. Limited, Singapore 768923 (SG)
(72) Inventor: TADAHAL, Shivkumar Basavaraj, Irvine, 92618 (US); ADHIKARI, Shubhodeep, Irvine, 92618 (US); FISCHER, Matthew J., Irvine, 92618 (US); RAVEENDRANATH KAMATH, Manoj, Irvine, 92618 (US); AGARWAL, Peyush, Irvine, 92618 (US); VERMA, Sindhu, Irvine, 92618 (US)
(74) Representative: Dilg, Haeusler, Schindelmann Patentanwaltsgesellschaft mbH

(57) **Abstract**

A communication device is configured to operate as a transmitter or a receiver. As a receiver, the communication device detects data frames that failed transmission. The device can determine whether the issue that caused the failure was internal (e.g., a buffer overrun, etc.) or external (e.g., channel interference, etc.). The device communicates, to the transmitter of the data, an indication of whether the issue of the failure was internal to a receiver, for example, in a block acknowledgement frame. As a transmitter, the device can respond to the indication. If the issue was not internal, the device may correct for external causes, for example, by increasing transmission power. **If** the issue was internal, the device may perform no action (e.g., expecting the error to clear) or the device may perform a mitigating action such as transmitting smaller data frames, smaller aggregations of data frames, or decreasing the transmission rate.

## Description

### BACKGROUND

The present disclosure relates to communicating blocks of data frames between a transmitting and a receiving device.

A wireless local area network (WLAN) device may transmit blocks of data frames to a receiving device. Not all data frames may be received appropriately. The receiving device can transmit a block acknowledgement frame indicating transmissions that were not properly received. The transmitting WLAN device may take an action in an attempt to improve reception.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIG. 1B is a block diagrams depicting computing devices useful in connection with the methods and systems described herein, according to some embodiments.
FIG. 1C is another block diagrams depicting computing devices useful in connection with the methods and systems described herein, according to some embodiments.
FIG. 2 is a schematic block diagram of a communications device configured to identify processing failures as internal failures, according to some embodiments.
FIG. 3A is a control field of a block acknowledgement frame with one or more bits indicating internal failures, according to some embodiments.
FIG. 3B is a portion of a block acknowledgement frame using a compressed format and including a receiver internal error bitmap and/or a last received sequence number without a receiver internal error, according to some embodiments.
FIG. 3C is a portion of a block acknowledgement frame using a multi-station format and including a receiver internal error bitmap and/or a last received sequence number without a receiver internal error, according to some embodiments.
FIG. 4 is a swimlane diagram illustrating a flow of operations for communication between two devices of FIG. 2, according to some embodiments.

### DETAILED DESCRIPTION

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.1 1g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

The number of use cases and scenarios that a wireless local area network (WLAN) chip needs to operate seamlessly is ever-increasing. Because of these complex use cases, system architectures, and operating environments a WLAN device may not be able to sustain peak transmission (TX) and receipt (RX) throughputs. Devices may fail to receive and/or appropriately process transmissions (e.g., data frames) for a variety of reasons. For example, insufficient device hardware such as data buffers, unavailability of shared hardware resources, channel interference, high noise environments, etc. can all lead to communication failures.

Current WLAN devices transmitting data are not configured to distinguish between different types of failures. The transmitters also do not receive failure or error type information from the receiver. As a result of lack of information, the WLAN device performing transmission may take an inappropriate action given the type of errors that are occurring. For example, errors that are specific to a receiver can be termed as "Receiver-Internal-Errors" (RIE). RIE may occur due to a priority of in-device coexistence with Bluetooth (BT) and/or in-device concurrent role (e.g., peer-to-peer (P2P) communications), processing delays, insufficient receive buffer size; and/or unavailability of any shared hardware resources, etc. RIE may be different from and have different root causes than the "Medium-Related-Errors" (MRE) resulting from congestion/collisions and poor channel conditions such as noisy conditions leading to a poor signal to noise ratio (SNR). Current WLAN devices transmitting data cannot distinguish between RIE and MRE type errors. As a result, the WLAN device may perform an action to attempt to mitigate MRE when RIE are occurring. Such a response may have no effect on improving reception and processing of the data frames and may further slow communication or run at elevated power when not necessary.

Current WLAN devices may treat any negative acknowledgement as increased packet error rate regardless of whether the error are a RIE or an MRE. Processing all errors as if they have the same cause may result in the transmitter taking an unnecessary action or countermeasure such as boosting transmission power or decreasing the transmission rate. Boosting transmission power, for example, may not improve the success rate if failures are related to intermittent unavailability of shared hardware resources. In such a scenario the error rate would remain the same but could cause increased power usage and may reduce the equipment lifespan. Similarly, decreasing the transmission rate also may not prevent certain RIE and would unnecessarily reduce the data throughput.

The systems and methods described in the present disclosure improve upon existing equipment and WLAN technology by providing the ability for the receiver/transmitter to distinguish between an RIE and an MRE and take an appropriate action. For example, the transmitter may take an action that is tailored or customized for the actual type of error that is occurring. In some embodiments, the transmitter and receiver may be configured for and actively performing block communication where the transmitter sends multiple data frames together. The receiver may detect errors as the data frames are received. For example, the receiver may detect data frames that failed to be processed, for example, because they were not received, were received in a degraded form, or failed processing internally. The receiver may determine the data frames that have failed due to RIE (e.g., solely due to RIE or partially due to RIE). The receiver may transmit an indication for the RIE to the transmitter thereby allowing the transmitter to take an appropriate action. For example, the receiver may add information related to RIE in a block acknowledgement frame.

The receiver may provide an indication of RIE in the form of a single binary bit. For example, the receiver may provide an indication that the fraction of processing failures that are RIE is greater than a threshold fraction or otherwise satisfy an internal error criterion. Upon receipt of this indication the transmitter may perform an appropriate action. For example, the transmitter may decide to take no action (e.g., decide not to take an action that could mitigate MRE such as boosting transmission power). Alternatively, the transmitter may take an action configured to mitigate RIE such as reducing the data frame size and/or reducing the block (aggregation) size. In some embodiments, the receiver, having specific knowledge related to the errors, provides suggested actions to the transmitter to mitigate the errors and reduce the number of data frames that fail processing. Thereby communications may be improved by adjusting communication parameters for a given type of error.

The receiver may provide alternative or additional indications of RIE to the transmitter. For example, the receiver may provide a bitmap corresponding to each of the data frames recently transmitted where each bit indicates whether or not the data frame failed processing due to RIE. The bitmap may be added to a field of a block acknowledgement frame, for example, in addition to a bitmap indicating data frames that failed processing for any reason (e.g., data frames that failed processing due to RIE or MRE). Additionally or alternatively, the receiver may provide the sequence number of the last data frame that did not fail processing due to RIE in a block acknowledgement frame. Similarly, this may be in addition to the sequence number of the last data frame that had any error.

Advantageously, the transmitter may process the information received related to RIE and take an appropriate action. For example, the transmitter may determine that a significant number of or fraction of the failures were related to RIE and decide to take no action. While taking no action may not mitigate future RIE, the transmitter advantageously will not increase transmission power and thus power usage to no avail. The transmitter may also investigate which of the packets are failing due to RIE and determine a specific mitigating action to reduce these failures. Additionally or alternatively, the transmitter may receive a suggested mitigating action from the receiver. The transmitter may take an action to reduce the processing errors due to RIE based upon the information provided by the receiver advantageously performing an action for RIE when RIE are present and an action for MRE when MRE are present.

Some embodiments of the present disclosure relate to a first device including one or more circuits configured to perform operations. The operations include detecting one or more data frames, received from a second device, failed processing. The operations also include generating a data field indicating at least one of the one or more data frames failed processing due at least in part to one or more issues internal to the first device. The operations also include transmitting the data field to the second device.

A data frame refers to a structured container for transmitting data across network interfaces in some embodiments. For example, a data frame may refer to a Wi-Fi frame or an IP packet. A data frame may include a payload and header information including fields representing the frame type and control information, and the destination address, for example, including the recipient's MAC address. A data field refers to data for use in a specific location in some embodiments. For example, a data field may refer the frame control field for different types of data frames or any of the subfields thereof. In some embodiments, a data field refers to data for a specific location of a data frame wherein the meaning (e.g., purpose, use, etc.) of the data may be given based upon an agreed upon position (e.g., for interoperability) codified in a standard or specification. Issues that cause failed processing internal to a receiving device refers to a failure for which the receiver received a signal having a data frame, the frame check sequence (FCS) of the data frame passed its check, and the frame passed any other security checks, but processing still failed due at least in part to a root cause related to the hardware, software, etc. of the receiver in some embodiments. For example, a issues that cause failed processing internal to the receiving device may refer to a buffer overrun, processing delays, receiving device hardware being used for another process, or the receiving device interacting with other devices, etc. A failure that is due to one or more issues internal to a device is not intended to imply that the issue must directly cause the failure. For example, a buffer overrun may cause a data frame to be skipped ultimately leading to a failure downstream, the failure may be directly caused by nonsequential data frames but indirectly caused by the buffer overrun. Additionally, a failure due to one or more issues internal to a device may be discovered (e.g., identified, noted, etc.) by an external device or based on an external effect. For example, the transmitter may receive no acknowledgement of a data frame and indicate the lack of acknowledgement to the receiver. The receiver can thereby detect the failure and may determine if the failure was due to an internal issue. A data frame that fails processing refers to a data frame for which the data is not received and processed by a target or downstream application of the receiving device in some embodiments. For example, a data frame may fail processing for medium-related reasons (e.g., a poor signal causing a redundancy check error) or reasons internal to the receiver (e.g., a buffer overrun) either of which may cause the data not to be received by downstream applications.

In some embodiments, the operations also include communicating an action to the second device, the action identified to mitigate the one or more issues internal to the first device.

In some embodiments, the action is based at least upon a type of the one or more issues internal to the first device.

In some embodiments, communicating the action to the second device is responsive to determining at least one of the one or more data frames failed processing due at least in part to one or more issues internal to the first device and the action is at least one of: a request to adjust a size of data frames communicated to the first device; a request to adjust a size of data frame aggregations communicated to the first device; a request to adjust a modulation and coding scheme used to communicate the data frames to the first device; a request to adjust a resource unit used to communicate the data frames to the first device; or a request to adjust a number of spatial streams used to communicate the data frames to the first device.

An action refers to any intended behavior or performance by a device in some embodiments. For example, an action may refer to behavior to achieve a specific result such as sending a request to adjust parameters.

A size of data frames refers to the maximum length of a data unit that is to be transmitted in a single frame across a wireless network in some embodiments. For example, a size of data frames may refer to the maximum payload size in bytes that a WiFi frame can carry. A size of data frame aggregations refers to a maximum number of data frames or data payloads to be transmitted in a single block or unit in some embodiments. For example, a size of data frame aggregations may refer to a maximum number of MAC service data units (MSDUs) included in a data frame or a maximum number of MAC protocol data units (MPDUs) included in a physical layer frame. A modulation and coding scheme refers to a modulation type and a coding rate in some embodiments. For example, a modulation and coding scheme may refer to a 16-quadrature amplitude modulation (QAM) with a coding rate of ¾. The modulation type refers to a relation between a sequence of binary digits (e.g., a symbol) and a magnitude and phase of a transmitted signal (e.g., as on a constellation diagram) in some embodiments. For example, the modulation type may refer to binary phase shift keying (BPSK), 16 QAM, or 256 QAM. The coding rate refers to the fraction of data transmitted that is not redundant (e.g., not used for forward error correction) in some embodiments. For example, a coding rate may refer to a 3/4 coding rate indicating that 25% of the transmitted symbols are redundant and used to detect transmission errors (e.g., 75% are used to transmit data).

A resource unit (RU) refers to a particular group of tones within an orthogonal frequency-division multiple access (OFDMA) communication channel in some embodiments. For example, a resource unit may refer to 48 subcarriers and 4 pilot subcarriers that make up a 52-tone resource unit of a 20 MHz bandwidth transmission. Resource units of a different number of tones may also be available, including, but not limited to, 26-tone resource units, 106 tone resource units, and 242-tone resource units. A spatial stream refers to an individual data stream (e.g., path) from an antenna on the transmitter to an antenna on the receiver in some embodiments. For example, a spatial stream may refer to each transmission path in a multiple-input multiple-output (MIMO) system. The additional spatial streams may be used to increase data throughput.

In some embodiments, the data field is transmitted within a block acknowledgement frame.

In some embodiments, the operations also include at least one of transmitting an indication of capability to communicate whether the one or more data frames failed processing due at least in part to the one or more issues internal to the first device; or receiving an indication the second device is configured to perform an action responsive to the one or more data frames failing processing due at least in part to the one or more issues internal to the first device.

In some embodiments, the data field includes an identification of a received data frame that did not fail due at least in part to the one or more issues internal to the first device.

In some embodiments, the identification is a binary representation of a sequence number of a most recent received data frame that did not fail due at least in part to the one or more issues internal to the first device.

An identification of a received data frame may refer to any identifier for the data frame in some embodiments. For example, the identification may refer to a sequence number for the data frame used to ensure data is processed in the correct order. In some embodiments, the identification or sequence number may be a binary representation. A binary representation of a number refers to a conversion of a number into a binary representation in some embodiments. For example, a binary representation may be fix-point number where each of one or more bits representing the number is multiplied by a factor of two that is based upon a fixed position. As another example, a binary representation may be an integer where each bit is multiplied by a positive factor of two to obtain the number.

In some embodiments, the data field includes a sequence corresponding to a number of received data frames including the one or more data frames that failed processing, the sequence indicating whether each of the number of received data frames failed processing due at least in part to the one or more issues internal to the first device.

In some embodiments, the sequence includes a binary symbol for each data frame of the number of received data frames.

In some embodiments, the data field is a binary bit within a control field for a block acknowledgement frame.

A sequence corresponding to a number of received data frames refers to a sequence of numbers, binary bits, binary symbols, etc. in some embodiments. For example, the sequence may refer to a list of values that have the same number of values as the number of received data frames to which the sequence corresponds and the sequence may be ordered in the same way. A binary symbol refers to a binary data value (e.g., a '1' or a '0') or a sequence thereof in some embodiments. For example, a binary symbol may refer to a single '1' or '0' or a binary symbol may refer to any of the sequences '00', '01', '11', or '10'. A sequence of binary symbols may include multiple binary symbols, for example, each having the same number of binary bits or digits. A binary bit refers to a single digit of a binary value or field in some embodiments. For example, a bit may refer to a '1' or '0'. A control field refers to a specific section within a data frame and includes various subfields used to define, manage, and control the communication in some embodiments. For example, a control field may be a portion of a data frame and include subfields such as a protocol version, a block acknowledgement type, a subtype, an indication of more fragments, order, etc. A block acknowledgement frame refers to a specific type of WiFi control frame used to acknowledge the receipt of multiple data frames in some embodiments. For example, a block acknowledgement frame may include a bitmap indicating the status (success or failure) of each data frame within a block.

In some embodiments, the one or more data frames that failed processing are one or more first data frames and include one or more second data frames that failed processing due at least in part to the one or more issues internal to the first device, and the binary bit indicates whether a ratio of the one or more second data frames to the one or more first data frames exceeds an internal failure threshold.

In some embodiments, the data field indicates the one or more issues contributed either directly or indirectly to the failed processing.

Some embodiments of the present disclosure relate to a first device including one or more circuits configured to perform operations. The operations include transmitting a number of data frames to a second device. The operations also include receiving a first indication that one or more failed data frames of the number of data frames failed to be processed by the second device. The operations include receiving a second indication that at least a subset of the one or more failed data frames failed to be processed due at least in part to one or more issues internal to the second device. The operations also include adjusting one or more parameters for transmitting data frames responsive to the subset of the one or more failed data frames satisfying a criterion.

In some embodiments, the operations also include receiving, from the second device, an indication that the one or more failed data frames satisfied the criterion.

In some embodiments, the one or more parameters include at least one of: a size of the data frames communicated to the second device; a size of data frame aggregations communicated to the first device; a modulation and coding scheme used to communicate the data frames to the second device; a resource unit used to communicate the data frames to the second device; or a number of spatial streams used to communicate the data frames to the second device.

In some embodiments, the first indication and the second indication are received within a block acknowledgement frame.

In some embodiments, the second indication includes at least one of: an indication of a received data frame that did not fail due at least in part to the one or more issues internal to the second device; an indication of whether each of the number of data frames failed processing due at least in part to the one or more issues internal to the second device; or a binary bit within a control field for a block acknowledgement frame.

In some embodiments, the criterion is a first criterion and the operations also include performing an action for mitigating medium related errors responsive to the one or more failed data frames satisfying a second criterion and the subset failing to satisfy the first criterion.

Some embodiments of the present disclosure relate a device including one or more circuits configured to perform operations. The operations include receiver mode operations and transmitter mode operations. The receiver mode operations include determining one or more received data frames failed processing, determining a first fraction of the one or more received data frames that failed processing due at least in part to one or more issues internal to the device, and transmitting, in a control field of a block acknowledgement frame, an indication that the first fraction is greater than a threshold. The transmitter mode operations include receiving the indication that a second fraction of one or more transmitted data frames that failed to be processed by a receiving device, failed due at least in part to one or more issues internal to the receiving device and adjusting one or more parameters for transmitting data frames responsive to the indication.

A medium related error refers to a communication error that is caused by changes in the transmitted signal during the propagation of the data frame to the receiver in some embodiments. For example, a channel related error may refer to a processing error caused by low signal to noise ratio, channel distortion, etc. In some embodiments, a medium related error can be mitigated by increasing transmission power (e.g., to increase signal to noise ratio). A receiver mode refers to a mode where a device is receiving a transmission of data (e.g., including multiple data frames) in some embodiments. A transmitter mode refers to a mode where a device is transmitting data (e.g., including multiple data frames) in some embodiments. For example, a device in receiver mode may receive the transmission of data and then transmit an acknowledgement of the data frames indicating frames that failed to be received and/or processed appropriately and a device in transmitter mode may transmit the data and then await the acknowledgement in order to take an appropriate action (e.g., change how the data is transmitted and/or repeat failed data frames).

The summary provided above is illustrative and not intended to be in any way limiting.

### Communications Network

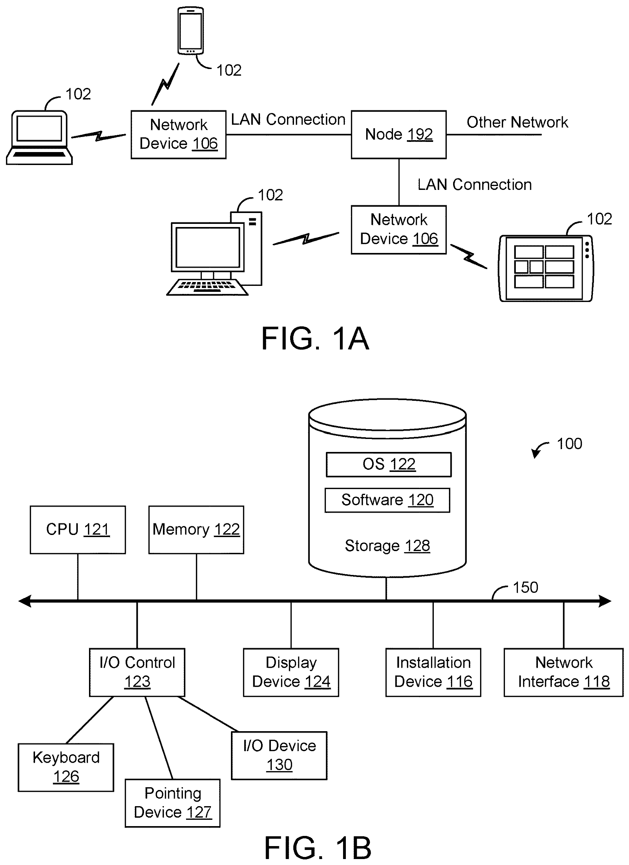

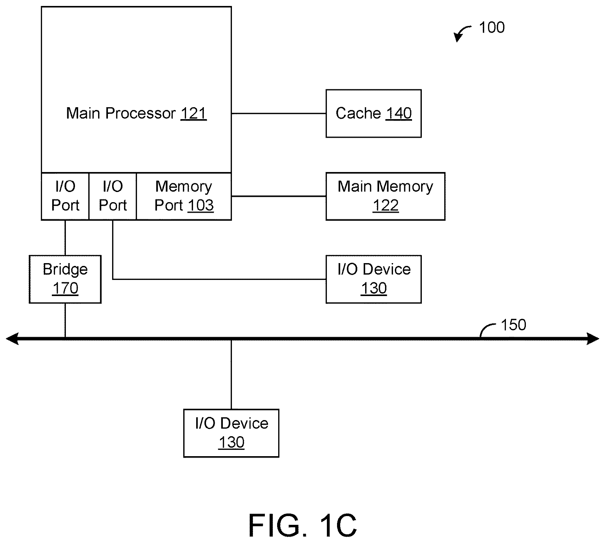

Prior to discussing certain embodiments, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can, for example, include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and/or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.1 1b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

### Wireless Device with Internal Failure Detection and Identification

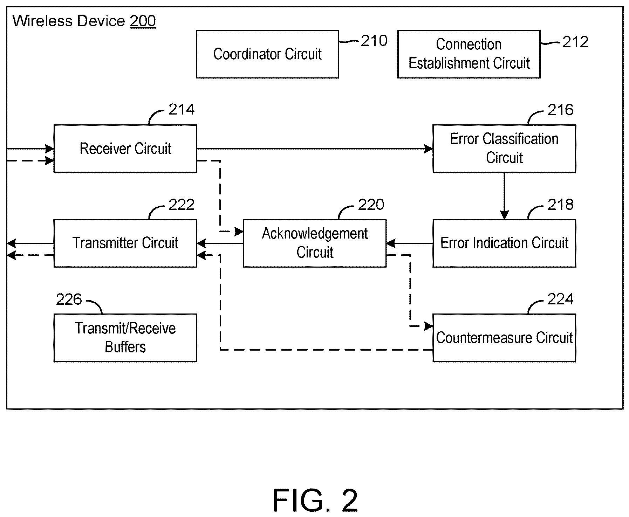

FIG. 2 is an illustrative block diagram of circuitry within a wireless device 200. The wireless device 200 may be part of the network environment shown in FIG. 1A. In some embodiments, the wireless device 200 implements a network device 106 providing wireless access to the LAN. In some embodiments, the wireless device 200 implements a wireless communication device 102 and connects to the network device 106 to acquire wireless access to the LAN. The wireless device 200 may include a number of circuits configured to enhance the reliability, efficiency, and data throughput of communications using the wireless device 200. The circuits may provide enhanced reliability by detecting processing failures as receiver internal errors (RIE). For example, the wireless device 200 may distinguish RIE from medium related errors (MRE) and communicate information related to the RIE to the transmitting device for an appropriate action to be performed. The circuitry, for example, may be implemented by any of the devices connected to or communicating with the networks shown in FIG. 1A. For example, the circuitry may be implemented within network device 106 and used to communicate with any user device 102. Additionally or alternatively, the circuitry may be implemented within any user device 102 during communications with the network device 106. In some embodiments, the circuitry may be implemented using one or more memory devices storing instructions to be executed by one or more processors. In some embodiments, the circuitry (e.g., any of the circuits 210-224) may be implemented using processors including, but not limited to, application specific integrated circuits (ASIC), digital signal processing (DSP) integrated circuits, or a system on a chip integrated circuit.

The processors may be a general purpose or specific purpose processors, an application specific integrated circuit (ASIC), one or more field programmable gate arrays (FPGAs), a DSP circuit, a group of processing components, or other suitable processing components. The processors may be configured to execute computer code and/or instructions stored in the memories or received from other computer readable media (e.g., CDROM, network storage, a remote server, etc.). The processors may be configured in various computer architectures, such as graphics processing units (GPUs), distributed computing architectures, cloud server architectures, client-server architectures, or various combinations thereof. One or more first processors can be implemented by a first device, such as an edge device, and one or more second processors can be implemented by a second device, such as a server or other device that is communicatively coupled with the first device and may have greater processor and/or memory resources.

The memories may include one or more devices (e.g., memory units, memory devices, storage devices, etc.) for storing data and/or computer code for completing and/or facilitating the various processes described in the present disclosure. The memories may include random access memory (RAM), read-only memory (ROM), hard drive storage, temporary storage, non-volatile memory, flash memory, optical memory, or any other suitable memory for storing software objects and/or computer instructions. The memories may include database components, object code components, script components, or any other type of information structure for supporting the various activities and information structures described in the present disclosure. The memories may be communicably connected to the processors and can include computer code for executing (e.g., by the processors) one or more processes described herein.

The wireless device 200 includes several interconnected circuits according to some embodiments. The wireless device 200 may include a coordinator circuit 210, a connection establishment circuit 212, a receiver circuit 214, an error classification circuit 216, an error indication circuit 218, an acknowledgement circuit 220, a transmitter circuit 222, and a countermeasure circuit 224. It should be understood that in some embodiments the functionality of the wireless device 200 may be distributed differently across any number of circuits. For example, the functionality of the error classification circuit 216 and the error indication circuit 218 may be performed by a single circuit. As another example the features described as being performed by the acknowledgement circuit 220 may be split across multiple circuits (e.g., for outbound and inbound acknowledgements)

In some embodiments, the wireless device 200 includes a coordinator circuit 210 configured to control the timing and flow of data through the other circuitry of the wireless device 200. For example, the coordinator circuit may cause the modules or circuits to execute in a specific order to perform the overall functionality of the wireless device 200. In some embodiments, the coordinator circuit 210 may route the information and/or outputs of other circuits or modules that are dependent on the information or use the information as an input. The coordinator circuit 210 may also determine a mode of the wireless device 200. For example, the coordinator circuit 210 may determine if the wireless device 200 is currently transmitting a block of data frames or if the wireless device 200 is receiving a block of data frames.

The wireless device 200 may include a connection establishment circuit 212 configured to establish a connection with another device (e.g., another wireless device 200 or similar device communicating using a similar protocol). The connection establishment circuit 212 may be configured to negotiate the communication parameters with the other device. The connection establishment circuit 212 may be configured to negotiate a network type (e.g., a client/access point relationship or a peer-to-peer connection). In some embodiments, the connection establishment circuit 212 is configured based upon whether the wireless device 200 can operate as an access point. For example, the connection establishment circuit 212 in a wireless device 200 that will be used only as a client device may include a subset of the potential functionality. For example, a connection establishment circuit 212 operating in a wireless device 200 configured to be a client device may not require the ability to generate internet protocol (IP) addresses for connecting devices.

In some embodiments, the connection establishment circuit 212 is configured to negotiate a data transmission rate. For example, the connection establishment circuit 212 may be configured to negotiate a modulation and coding scheme used during transmission of data. In some embodiments, the connection establishment circuit 212 is be configured to negotiate the channel and/or subunits within the channel upon which communications are performed. For example, the wireless device 200 acting as an access point may select a resource unit (e.g., 26-tone, 52-tone, 242-tone, etc.) of an orthogonal frequency division multiple access (OFDMA) transmission channel and communicate the parameters of the resource unit to the client device. In some embodiments, the connection establishment circuit 212 is configured to negotiate power management settings for the connection. For example, the connection establishment circuit 212 may determine power save mode parameters including a wake interval, sleep mode criteria, etc. In some embodiments, the connection establishment circuit 212 may negotiate quality of service parameters for the communications. For example, the connection establishment circuit 212 may negotiate queue management mechanism and/or retransmission policies.

In some embodiments, the connection establishment circuit 212 establishes block acknowledgement (BA) parameters for a communication session. The wireless device 200, acting as a transmitter of data, may use the connection establishment circuit 212 to establish block transmission of data frames to a second wireless device receiving the data. For example, the wireless device 200 may send an add block acknowledgement request (ADDBA) frame including information such as the traffic type for which the BA parameters are being configured and/or a buffer size indicating the number of data frames that can be aggregated within one BA. After establishing the BA session, the wireless device 200 (operating as a transmitter) may view BA frames sent by the receiver to determine if retransmission is necessary and/or determine if any parameters for the communication session should be adjusted. The wireless device 200 may determine (e.g., based on the BA frames) if any dropped frames are related to receiver internal errors (RIE) or medium related errors (MRE) and take an appropriate mitigating action.

The wireless device 200, acting as a receiver of data, may use the connection establishment circuit 212 to establish block transmission of data frames to a second wireless device receiving the data. For example, the wireless device 200 may send an ADDBA response frame in response to receiving an ADDBA. The ADDBA response frame may accept or reject the request and the parameters thereof. After establishing the BA session, the wireless device 200 (operating as a receiver) may transmit BA frames to the transmitter. The BA frames may include an indication of data frames that failed to be processed by the receiver (e.g., the frames were not received, were sufficiently degraded due to degradation, or failed due to an internal error). The BA frame may include an indication of data frames that failed processing due to RIE (e.g., caused by, either partially or fully, directly or indirectly, an issue internal to the receiver). For example, the BA frame may include a bitmap indicating the data frames that failed processing due to RIE, a last data frame that did not fail due to RIE, and/or a binary bit indicating that a threshold amount of data frames failed due to RIE. In some embodiments, the connection establishing circuit 212 is configured to establish a configuration for the methods (e.g., protocol, data types, locations within a sequence of bits, etc.) by which RIE related information is communicated between a transmitter and receiver.

In some embodiments, the connection establishment circuit 212 may renegotiate transmission parameters. The connection establishment circuit 212 of a wireless device 200 operating as a transmitter of a block of data frames may adjust the transmission parameters by renegotiating (e.g., suggesting new parameters, etc.) with the receiving device. For example, the wireless device 200 may receive an indication that many of the errors are related to RIE and use the connection establishment circuit 212 to negotiate new parameters that may mitigate (e.g., reduce the number of, etc.) RIE. The wireless device 200 may advantageously avoiding performing unnecessary actions that would have no effect on RIE.

In addition to the circuits, FIG. 2 illustrates two example data flows within the wireless device 200. A first example data flow indicated by a solid line describes the data flow when the wireless device 200 is operating as a receiver of a block of data frames according to some embodiments. The first data flow illustrates the wireless device 200 receiving a block of data frames, detecting frames that failed processing due to RIE, and transmitting a BA frame indicating the RIE. A second example data flow indicated by a broken line describes the data flow when the wireless device 200 is operating as a transmitter of a block of data frames according to some embodiments. The second data flow illustrates the wireless device 200 receiving a BA frame from the receiver, determining an appropriate countermeasure if blocks have failed processing, and adjusting the transmission parameters of the communication session.

In some embodiments, the wireless device 200 includes a receiver circuit 214 configured to receive electromagnetic transmissions by way of an antenna. The receiver circuit 214 may also amplify the received signal for processing. The receiver circuit 214 may be configured to decode the transmission waveform into a number of digital bits of a data frame. The decoder may, for example, decode an orthogonal frequency division multiple access (OFDMA) signal by first demodulating the signal, performing a fast Fourier transform (FFT) to obtain a number of symbols including a phase and magnitude at various sub-carrier frequencies. The symbols may be compared to a constellation diagram to determine the associated binary sequence.

In some embodiments, the wireless device 200 includes a transmitter circuit 222 configured to transmit electromagnetic transmissions by way of an antenna. The transmitter circuit 222 may also amplify the signal prior to transmitting the signal. The transmitter circuit 222 encodes the binary data into a communication signal and modulates the signal at a carrier frequency prior to transmission. In some embodiments, the binary data are encoded by first translating a number of bits into a phase and magnitude associated with a number of sub-carrier frequencies and then transforming into the time domain using an inverse FFT. The signal can then be modulated at the carrier frequency and transmitted.

The receiver circuit 214 and the transmitter circuit 222 provide the wireless device 200 with the ability to communicate wirelessly. Wireless communications may be received by other devices in the area. To prevent unwanted recovery of the communication and/or tampering with the communication by a man-in-the-middle (MITM) attack the communications are encrypted. The communication may be encrypted using a transient key and a nonce. The nonce may be combined with the transient key to perform encryption. For example, the nonce may be used as an initialization vector for the encryption algorithm. Reuse of nonce values can compromise the encryption allowing an unwanted threat actor to decode the message. Nonce values may be managed by the wireless device 200 (e.g., an access point or a connecting client device).

The receiver circuit 214 may receive a transmission, convert the transmission into a binary form, and store the data for processing in a transmit and receive buffers 226 (e.g., memory, etc.). The transmit and receive buffers 226 may be memory allocated of a particular size. For example, the transmit and receive buffers 226 may have include enough memory to store a number of (e.g., 32, 64, etc.) data frames for processing. As data is processed, the data is removed from the transmit and receive buffers 226 and new room is made for incoming data frames. If data is received at a rate faster than the wireless device 200 can process the information the number of data frames stored in the transmit and receive buffers 226 may increase. If the disruption to processing lasts too long the transmit and receive buffers 226 may overrun and data frames may be dropped (e.g., the data frames may fail to be processed and require retransmission).

In some embodiments, the error classification circuit 216 monitors reception of data frames by the receiver circuit 214. The error classification circuit 216 may be configured to determine if a data frame was processed appropriately. Additionally or alternatively, the error classification circuit 216 may be configured to determine whether a data frame that failed processing failed due to an RIE (e.g., any error due to one or more issues internal to the wireless device 200) or whether the data frame that failed processing failed due to an MRE (e.g., errors due to channel noise, distortion, transmission distance, etc.). The error classification circuit 216 may store a list of data frames that failed a redundant check policy. For example, the error classification circuit 216 may perform a parity bit check, a cyclic redundancy check (CRC), or any other mechanism for determining if the data was received without changes (e.g., due to channel interference or medium distortion).

The error classification circuit 216 may also be configured to detect failures having a cause that is internal to the wireless device 200. Processing of data frames may fail internally due to a number of reasons including but not limited to a priority of in-device coexistence with Bluetooth (BT) and/or in-device concurrent role (e.g., peer-to-peer (P2P) communications); processing delays; insufficient receive buffer size; and/or unavailability of any shared hardware resources; etc. In some embodiments, the error classification circuit 216 may monitor the sequence numbers of the data frames as they are received by the wireless device 200 and/or processed. For example, the error classification circuit 216 may maintain a list of the sequence numbers of the data frames that have been processed at various stages of the processing performed by the wireless device 200. If a data frame is not successfully processed, it will not be listed in sequence numbers associated with that stage. The error classification circuit 216 may be configured to determine at what stage processing of the data frame failed. The error classification circuit 216 may, for example, compare the sequence numbers at each stage and associate an error with the stage of processing after which the sequence number no longer listed.

The error classification circuit 216 may be configured to determine data frames that were not processed at any stage. For example, data frames may be dropped from the transmit and receive buffers 226 if different operations have processor priority over processing the data frames and unprocessed data frames are dropped to make room in the transmit and receive buffers 226 for more recently received data frames. Additionally or alternatively, if the receiver circuit 214 is used for another service, some data frames may not make it to the transmit and receive buffers 226. The error classification circuit 216 may detect gaps in the initial list of processed sequence numbers for data frames and associate such gaps with internal processing errors (e.g., RIE).

It is contemplated that channel interference or other medium-related conditions may cause the sequence number to fail to be accurately received by the receiver circuit 214. The error classification circuit 216 may be configured to store data frames that are out-of-sequence (e.g., due to an MRE causing an error in the sequence number). The error classification circuit 216 may associate the stored, out-of-sequence data frames with gaps in the initial list of processed sequence numbers. The error classification circuit 216 may thereby correctly identify such errors as MRE rather than RIE even if the sequence numbers for the data frames do not appear on any list associated with processing of data frames. In some embodiments, the error classification circuit 216 may determine a missing sequence number for an out-of-sequence data frame and associate the out-of-sequence data frame with that sequence number for the purpose of error reporting. For example, the error classification circuit 216 may determine a number of bits of the sequence number that would have to be changed in order to match a missing sequence number (e.g., an edit distance between the out-of-sequence data frame and the missing sequence numbers). In some embodiments, the error classification circuit 216 calculates a number of errors associated with RIE rather than detecting which data frames failed processing due to RIE. The error classification circuit 216 may determine the number of errors associated with RIE by subtracting the number of out-of-sequence data frames from the number of sequence numbers for which no processing was detected. For example, the error classification circuit 216 may assume out-of-sequence data frames are caused by MRE and cancel a detected processing failure that may otherwise be attributed to a cause internal to the wireless device 200 (e.g., RIE).

The error indication circuit 218 may be configured to generate an indication of data frames that failed processing. The error indication circuit 218 may generate a first indication of data frames that failed processing (e.g., for any reason) and a second indication of data frames that failed processing due to internal causes (e.g., due to RIE). Additionally or alternatively, the error indication circuit 218 may generate an indication of data frames that failed due to medium-related causes (e.g., MRE type failures). The indications generated by the error indication circuit 218 may be provided in a variety of formats. For example, the error indication circuit 218 may generate a binary bit indicating that an internal failure criterion was satisfied. Evaluating the internal failure criterion may include a comparing a number of RIE related failures to a threshold number of RIE failures. Additionally or alternatively, evaluating the internal failure criterion may include comparing an internal failure fraction (or ratio) of the total number data frames that failed processing to the number of data frames that failed processing due to internal issues against a threshold fraction (or ratio).

In some embodiments, the error indication circuit 218 is configured to generate a binary encoded number (e.g., using a fixed-point or floating-point representation) representing either the number of RIE related failures, the aggregate number of failures, the MRE-related failures, or the internal failure fraction. In some embodiments, the error indication circuit 218 may indicate the last sequence number that failed processing due to causes related to any of the classes of failures (e.g., aggregate, RIE-related, MRE-related, etc.). In some embodiments, the error indication circuit 218 may indicate the last sequence number that did not fail processing due any of the classes of failures. In some embodiments, the error indication circuit 218 may generate a bitmap related to the data frames that failed due to a particular class of failure. For example, the bitmap may include a binary bit associated with each data frame of a block of data frames, the binary bit may indicate whether or not the associated data frame had the particular class of failure. Additionally or alternatively, the bitmap may include a binary symbol related to a type of failure for each associated data frame. For example, the binary symbol may include 3-bits for each data frame allowing for seven failure types to be indicated by the bitmap.

In some embodiments, the acknowledgement circuit 220 is configured to insert the indications generated by the error indication circuit 218 into a particular format for communication back to the transmitter. For example, the acknowledgement circuit 220 may insert an indication of whether data frames failed to be processed due to one or more issues internal to the wireless device 200 into a block acknowledgement (BA) frame. The BA frame may include the indication as well as flags to signal (e.g., indicate, show, designate, etc.) the format of the indication (e.g., single bit, last sequence number, bitmap, etc. as described herein).

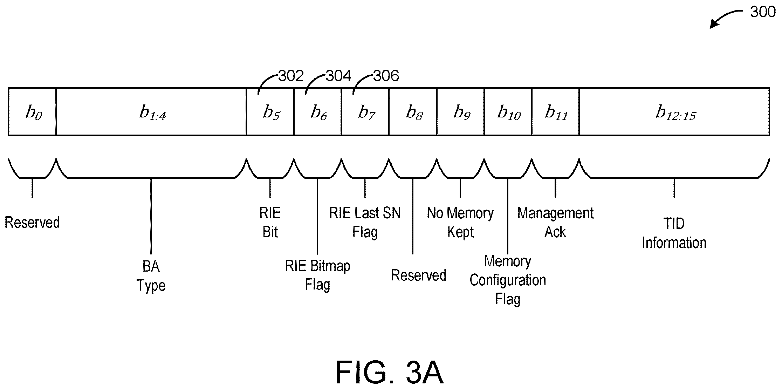

In some embodiments, the error indication circuit 218 generates a binary bit representing whether a RIE threshold has been satisfied, a last sequence number before RIE started, and/or a bitmap indicating data frames affected by the RIE and the acknowledgement circuit 220 generates a BA frame including the indication according to one or more of the example configurations shown in FIGS. 3A-3C.

FIG. 3A shows a configuration of a control field 300 for a block acknowledgement frame according to some embodiments. Many of the bits of the control field may be unchanged to allow for increased compatibility with legacy equipment. The acknowledgement circuit 220 may generate the control field 300 as part of a BA frame. The control field 300 is shown to include a first bit *b₀* reserved for future use according to some embodiments. The next three bits *b_{1:4}* may include information related to the block acknowledgement (BA) type according to some embodiments. For example, the bits *b_{1:4}* may be used to indicate if the BA is immediate or delayed, normal or compressed, and whether the BA may be used for multiple traffic type identifiers (TID). The bits *b_{9:10}* may be used as memory management flags, for example, to indicate if the frames that were acknowledged should be remembered. The bit *b₁₁* may be used to indicate a management acknowledgement in some embodiments. The bits *b_{12:15}* may indicate the traffic identifiers for which the BA frame is intended for. For example, the bits *b_{12:15}* may represent traffic identifiers such as background, best effort, video, voice, etc.

The control field 300 may include a number of bits related to identifying if a BA frame includes information related to processing failures with causes internal to the wireless device 200 (e.g., if the BA frame includes information related to RIE). For example, the control field 300 may include the three bits 302-306 (e.g., bits *b_{5:7}*)*.* The sixth bit 302 (e.g., *b₅*) may be used to indicate whether a threshold amount (e.g., number of, fraction of, etc.) of failures are related to RIE. The seventh bit 304 (e.g., *b₆*) may be used to indicate whether the BA frame includes a bitmap (e.g., sequence, etc.) related to failures having internal causes (e.g., related to RIE). The eighth bit 306 (e.g., *b₇*) may be used to indicate whether the BA frame includes a sequence number of a last data frame that was processed without RIE (or the last data frame that had RIE).

In some embodiments, the sixth bit 302 indicates whether the errors are related to RIE. For example, the value that is given to the sixth bit 302 may be generated by the error indication circuit 218 as described herein and may be communicated to the acknowledgement circuit 220 to be incorporated into the control field 300. The sixth bit 302 may be used to indicate a type of corrective (e.g., mitigating action) that should be taken by the transmitter of the blocks of data. For example, a '0' for the sixth bit 302 may indicate that the errors are not related to internal issues. Thus, if an action is taken due to errors, an appropriate action would be to mitigate MRE (e.g., by increasing transmission power, etc.). A '1' for the sixth bit 302 may indicate that the errors are related to internal issues. Thus, an action that would have the effect of mitigating MRE may not be appropriate. The transmitter may instead decide to take no action or the transmitter may change one or more transmission parameters that may mitigate the internal issues (e.g., reducing the size of the data frame, etc.).

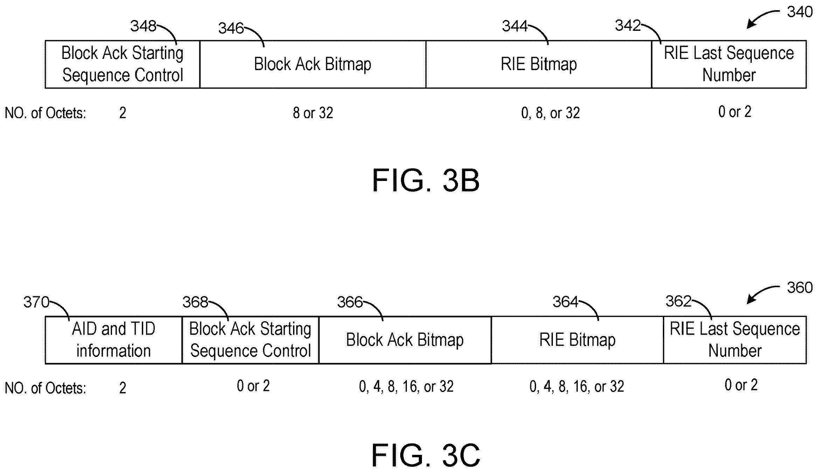

The acknowledgement circuit 220 may also generate the body (e.g., content, etc.) of the BA frame using a bitmap or last sequence number generated by the error indication circuit 218 as described herein. FIGS. 3B and 3C show different examples of the body of a BA frame. FIG. 3B shows BA frame 340 according to some embodiments. The BA frame 340 uses a compressed bitmap; however, it is contemplated that a BA using an uncompressed bitmap may be generated by using more octets (e.g., bytes) to represent the bitmap. FIG. 3C shows a multi-station BA frame 360 according to some embodiments.

With reference to FIG. 3B, in some embodiments, RIE information is appended to the end of the body of a BA frame. For example, the BA frame 340 may include a block acknowledgement starting sequence control number 348, a compressed BA bitmap 346, an RIE bitmap 344, and/or a RIE last sequence number 342. The compressed BA bitmap 346 may include a bitmap indicating the data frames of a block that failed processing (e.g., were not received correctly, failed CRC, or failed due to an internal cause). The compressed BA bitmap 346 may include one bit for each of the data frames in the block. For example, the compressed BA bitmap 346 may include 8 octets representing 64 data frames of the block. Additionally or alternatively, the compressed BA bitmap 346 may include multiple bits for each data frame. Each data frame may be represented by a binary symbol (e.g., an ordered set of bits such as '1011', '1110', etc.). The binary symbol may include additional information related to the data frame. For example, the compressed BA bitmap 346 may indicate by way of a binary symbol a type of failure for each data frame or a portion of the data frame that caused the failure. In some embodiments, the compressed BA bitmap 346 may be generated by the error indication circuit 218 and communicated to the acknowledgement circuit 220 to be included in the BA frame.

The RIE bitmap 344 may be similar in structure to the compressed BA bitmap 346 but be used to indicate the data frames that failed processing due to one or more internal issues (e.g., RIE). The RIE bitmap 344 may include one bit for each of the data frames in the block. For example, the RIE bitmap 344 may include 8 octets representing 64 data frames of the block. Additionally or alternatively, the RIE bitmap 344 may include multiple bits for each data frame. Each data frame may be represented by a binary symbol. The binary symbol may include additional information related to the data frame. For example, the RIE bitmap 344 may indicate by way of a binary symbol a type of RIE failure for each data frame or a stage of the processing where the RIE occurred for the data frame. In some embodiments, the RIE bitmap 344 is generated by the error indication circuit 218 and communicated to the acknowledgement circuit 220 to be included in the BA frame. In some embodiments, if the RIE bitmap 344 is included in the BA frame 340, the seventh bit 304 (e.g., the RIE bitmap flag) of the control field 300 is set to indicate the inclusion of the RIE bitmap 344. In some embodiments, the RIE bitmap 344 is not included in the BA frame 340 (e.g., as indicated by zero octets in FIG. 3B) and the seventh bit 304 of the control field 300 is not set. For example, the presence of RIE may be alternatively indicated (e.g., by the sixth bit 302, e.g., the RIE flag, of the control field 300), by the RIE last sequence number 342, or in some embodiments, RIE may be indicated as a type of failure by the binary symbol in the compressed BA bitmap 346.

In some embodiments, the BA frame 340 includes a RIE last sequence number 342 in addition to or as an alternative mechanism for providing feedback to the transmitter related to the presence of processing failures due to internal errors. The RIE last sequence number 342 may be a sequence number of the last data frame with which no internal error was associated. Alternatively, the RIE last sequence number 342 may indicate the last data frame for which an internal error was detected (e.g., by the error classification circuit 216). The sequence numbers may require up to 2 octets to represent them as indicated in FIG. 3B. In some embodiments, the RIE last sequence number 342 is generated error indication circuit 218 and communicated to the acknowledgement circuit 220 to be included in the BA frame. In some embodiments, if the RIE last sequence number 342 is included in the BA frame 340, the eighth bit 306 (e.g., the RIE last sequence number flag) of the control field 300 is set to indicate the inclusion of the RIE last sequence number 342. In some embodiments, the RIE last sequence number 342 is not included in the BA frame 340 (e.g., as indicated by zero octets in FIG. 3B) and the eighth bit 306 of the control field 300 is not set. For example, the presence of RIE may be alternatively indicated (e.g., by the sixth bit 302, e.g., the RIE flag, of the control field 300) or by the RIE bitmap 344.

With reference to FIG. 3C, a multi-station BA frame 360 is shown according to some embodiments. The multi-station BA frame 360 may include RIE information, for example, appended to the end of the body of the multi-station BA frame 360. In some embodiments, the multi-station BA frame 360 includes an association identifier and traffic identifier field 370, a block acknowledgement starting sequence control number 368, a compressed BA bitmap 366, an RIE bitmap 364, and/or a RIE last sequence number 362. The elements of the multi-station BA frame 360 may have a similar structure as those elements of the BA frame 340 with the exception that the association identifier and traffic identifier field 370 indicates the device and the traffic type to which the particular BA frame and thus the compressed BA bitmap 366, RIE bitmap 364, and/or the RIE last sequence number 362 relate.

In some embodiments, the acknowledgement circuit 220 may include a suggested action to be performed by the transmitter in the BA frame. For example, one or more additional fields may be added to the BA frame to indicate the suggested action. The suggested actions may be determined by the error indication circuit 218 and communicated to the acknowledgement circuit 220 for incorporation into a BA frame.

In some embodiments, the BA frame may include a field that indicates a type of action that was determined by the error indication circuit 218 to potentially mitigate the causes of any processing failures. For example, the BA frame may include a field indicating which of a set of actions may be taken by the transmitter. The set of actions may be represented by an integer number where the integer represents the action and/or the set of actions may be one hot encoded where a binary bit is used to flag each action that may be taken (e.g., allowing for the representation of multiple actions to be taken). Additionally or alternatively, the BA frame may include multiple fields. For example, the BA frame may include a field for each potential action that may be taken. The additional fields may allow for parameters for the action to be passed back to the transmitting device. For example, if the wireless device 200 is suggesting that the modulation and coding scheme be changed, a field indicating the specific modulation and coding scheme may be provided in the BA frame. Similarly if the wireless device 200 is suggesting the size of the data frames to be reduced, a field indicating the desired maximum size may be communicated in the BA frame.

Referring again to FIG. 2, the acknowledgement circuit 220 may be configured to generate the BA frame (e.g., the BA frame 340 or 360) including its control field (e.g., the control field 300) and communicate the BA frame to the transmitter circuit 222 for transmission to the transmitting device. For example, the BA frame is transmitted to provide feedback related to the retransmission of data frames, the error rate, and whether the errors are associated with RIE or MRE.

The solid lines in FIG. 2 indicate the flow of information within the wireless device 200 according to some embodiments when the wireless device 200 is operating in a receiver mode (e.g., to receive a block of data frames from a second device) according to some embodiments. As indicated the receiver circuit 214 may receive the transmission and decode the transmission (e.g., using an FFT and constellation diagram, etc.) into the binary content of the data frame. The error classification circuit 216 monitors processing of the data frames to detect processing failures and classify the types of failures that have occurred and/or their causes. For example, the error classification circuit 216 may classify errors as RIE or MRE. The detected and classified failures may be communicated to the error indication circuit 218. The error indication circuit 218 may be configured to convert the detected errors to a data field in a format required by the communication protocol currently used by the wireless device 200. The data fields may be communicated to the acknowledgement circuit 220 for inclusion into an acknowledgement transmission (e.g., a BA frame) for transmission back to the transmitter of the blocks by the transmitter circuit 222. For example, the acknowledgement circuit 220 may incorporate the data fields into the correct positions of the BA frame and the corresponding control fields. For example, the acknowledgement circuit 220 may follow the description of the control field 300 in FIG. 3A and/or the description of the BA frame 340 or 360 in FIGS. 3B or 3C.

The broken lines in FIG. 2 indicate the flow of information within the wireless device 200 according to some embodiments when the wireless device 200 is operating in a transmitter mode (e.g., sending a block of data frames to a second device) according to some embodiments. In the transmitter mode, the wireless device 200 may receive a BA frame at the receiver circuit 214. The receiver circuit 214 may decode the transmission (e.g., using an FFT and constellation diagram, etc.) into the binary content of the data frame. The data frame may be communicated to the acknowledgement circuit 220 for separation into the individual fields included in the BA frame. For example, the acknowledgement circuit 220 may extract failure information from the BA frame and communicate the failure information to the countermeasure circuit 224 for processing. The countermeasure circuit 224 may determine data frames that are to be retransmitted and cause them to be included for retransmission in the next block of data frames transmitted. The countermeasure circuit 224 may also use the information included in the BA frame to perform an action configured to mitigate (e.g., reduce, alleviate, etc.) the failures that are occurring. For example, the countermeasure circuit 224 may base the determination of an action on whether the processing failures are due to one or more issues internal to the receiving device (e.g., RIE) or medium-related issues (e.g., MRE). This information can be communicated to the transmitter circuit 222 to be transmitted to the receiving device. For example, the connection establishment circuit 212 may renegotiate transmission parameters with the receiver of the block to mitigate the errors.

The countermeasure circuit 224 may be configured to determine and/or execute an action to mitigate processing errors (e.g., MRE and/or RIE). Non-limiting examples of actions that may be performed (e.g., caused) by the countermeasure circuit 224 include: adjusting the size of a data packet, for example, by limiting the size of a data unit (e.g. MAC protocol data unit, MPDU, or MAC service data unit MSDU) or the number of data units that can be aggregated (e.g., as a maximum size of the aggregation) ; transmitting using a different resource unit; transmitting using a different modulation and coding scheme; increasing the transmission power; lowering transmission speeds; adjusting the number of spatial streams used by the transmission; etc. The action may be based upon the type, quantity, and/or distribution of the processing failures. For example, the action may be based upon whether the processing failures are related to one or more internal issues (e.g., RIE) or external issues (e.g., MRE). For example, for the scenario of MRE the countermeasure circuit 224 may cause an increase in the transmission power and/or lower transmission speeds; whereas for the scenario of RIE the countermeasure circuit 224 may limit the size of the MPDU/MSDU, limit the aggregation of the MPDU or MSDU, cause transmissions to use a different resource unit or modulation and coding scheme, and/or adjust the number of spatial streams. In some embodiments, the countermeasure circuit 224 is not configured to perform any specific actions to mitigate processing failures with internal causes, instead the countermeasure circuit 224 may decide to not perform a mitigating action associated with MRE if RIE are present or if a threshold amount of RIE has occurred.

In some embodiments, the suggested action is communicated by the receiving device. The countermeasure circuit 224 may use the information extracted from the appropriate fields by the acknowledgement circuit 220 to perform the appropriate action. The receiving device may also communicate parameters for the action. For example, the receiving device may indicate an appropriate modulation and coding scheme to be used for future transmissions. The countermeasure circuit 224 can cause adjustments to the transmitter circuit 222 using the parameters. For example, the countermeasure circuit 224 may request the connection establishment circuit 212 to renegotiate transmission parameters with the receiver device or the countermeasure circuit 224 may request adjustments by the transmitter circuit 222.

In some embodiments, the receiving device communicates a flag (e.g., the RIE bit, sixth bit 302 of the control field 300) indicating whether the failures indicated in the BA frame (e.g., by the BA bitmap) are related to one or more internal issues or medium-related issues. Additionally or alternatively, the flag may be used to indicate whether an action performed by the transmitter should be to mitigate RIE or MRE.

In some embodiments, the receiving device communicates a RIE bitmap (e.g., the RIE bitmap 344 or the RIE bitmap 364) or a RIE last sequence number (e.g., the RIE last sequence number 342 or the RIE last sequence number 362) along with a bitmap indicating any type of error (e.g., the compressed BA bitmap 346 or the compressed BA bitmap 366). The countermeasure circuit 224 may be configured to use this information to determine if the failures are related to one or more internal issues or medium-related issues. The countermeasure circuit 224 may similarly determine whether the action performed by the transmitter should be to mitigate RIE or MRE. The countermeasure circuit 224 may determine the number of errors that are attributed to internal issues. For example, the countermeasure circuit 224 may count the bits set to '1' in the RIE bitmap. The countermeasure circuit 224 may compare the number of errors that are attributed to internal issues to a threshold number to determine if the action should be to mitigate RIE or MRE. For example, if the number is greater than the threshold number the countermeasure circuit 224 may suggest an action to mitigate MRE. Additionally or alternatively, the countermeasure circuit 224 may generate a fraction (e.g., ratio, percentage, etc.) of the total number of processing failures (e.g., listed in the BA bitmap 364 or 366) to the number of errors attributed to internal issues. Additionally or alternatively, the countermeasure circuit 224 may generate a fraction (e.g., ratio, percentage, etc.) of the total number of transmitted data frames to the number of errors attributed to internal issues. Either of the fractions may be compared to a threshold to determine if the action should be to mitigate RIE or MRE.

In some embodiments, the countermeasure circuit 224 determines if the data frames associated with the RIE satisfy a detection criterion. For example, the countermeasure circuit 224 may monitor the RIE bitmap (e.g., the RIE bitmap 344 or the RIE bitmap 364) and/or the BA bitmap (e.g., the compressed BA bitmap 346 or the compressed BA bitmap 366) for patterns that may be indicative of a certain type of failure and/or an appropriate mitigating action. In some embodiments, the countermeasure circuit 224 executes a classifier (e.g., a neural network, decision tree, or other machine learning algorithm) to determine the type of failures that are occurring and/or the appropriate mitigating action. Executing the classifier may, for example, be performed to evaluate the detection criterion.

The countermeasure circuit 224 may aggregate the information from several BA frames prior to making a decision related to an action that should be performed. For example, the countermeasure circuit 224 may wait for a number of BA frames suggesting the same action before any action is performed by the transmitter. The countermeasure circuit 224 may calculate an action certainty (or uncertainty) and execute the action when the certainty (or uncertainty) crosses a threshold value. The certainty or uncertainty may be calculated using statistical approaches or as an output of the classifier.

### Operational Flow for Responding to Internal Errors

The circuitry of the wireless device 200 may execute methods (e.g., processes, operations, etc.) for providing feedback related to the causes of processing failures (e.g., RIE or MRE) and/or taking action to improve error rates. These methods may allow the transmitter to actively adjust transmission properties to achieve improvements in the error rates. The methods may alternatively allow the transmitter to not take actions that will have no effect on the error rates and may have a detrimental effect on power usage and/or overall transmission throughput.

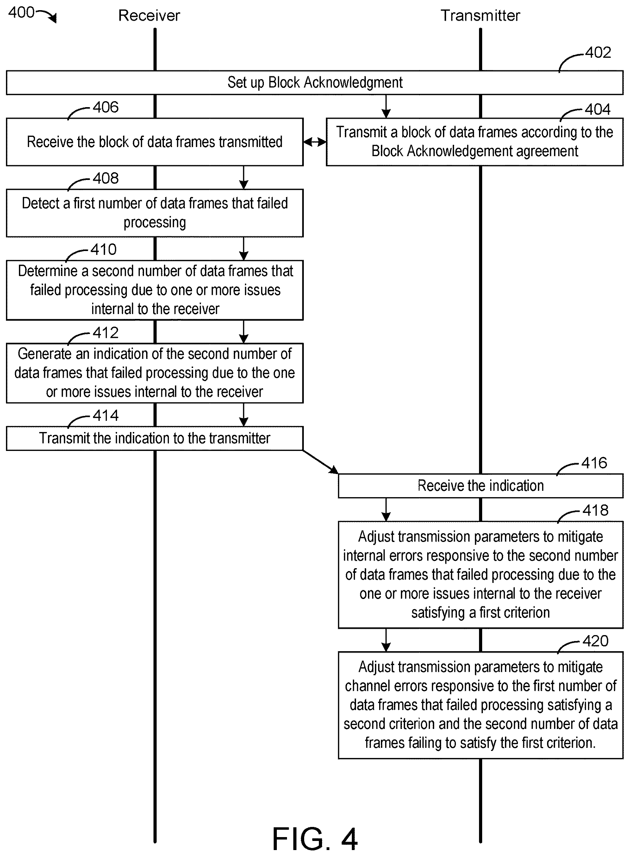

With reference to FIG. 4, the flow of operations 400 is shown on a swimlane diagram indicating if an operation is performed by the transmitter and/or receiver. The flow of operations 400 may be performed by two of the wireless devices 200. A flow of operations for any one wireless device 200 can be performed by executing the steps in a particular swimlane. For example, the receiver swimlane indicates the operations performed by a wireless device 200 operating in a receiver mode (e.g., to receive a block of data frames) and the transmitter swimlane indicates the operations performed by a wireless device 200 operating in a transmitter mode (e.g., to transmit a block of data frames).

In some embodiments, the flow of operations 400 includes setting up block acknowledgment (BA) in the operation 402. Setting up BA may include the transmitter sending an add block acknowledgement (ADDBA) request frame. The ADDBA request frame may include parameters establishing the policy for this communication session. For example, the ADDBA may include a buffer size, a specification of immediate or delayed BA, a timeout value, and/or a starting sequence number. The receiver may send a ADDBA response frame, for example, to accept or reject the request. The receiver may also provide additional parameters or alternative parameters for the session. In some embodiments, the operation 402 is performed by the connection establishment circuit 212.

In some embodiments, the ADDBA request frame includes an indication the transmitter is configured to perform an action responsive to the one or more data frames failing processing due at least in part to the one or more issues internal to the first device (e.g., solely due to RIE or partially due to RIE). This transmitter may indicate the actions it is configured to perform, the format (or formats) by which it can receive an indication of failures due to one or more issues internal to the receiver, and/or any other parameters related to the configuration of receiving indications of failures due to one or more issues internal to the receiver. For example, the transmitter may provided a suggested configuration for an RIE portion of the BA frame for the receiver to accept or renegotiate. In some embodiments, the ADDBA response frame may include a configuration for communicating an indication of failures due to one or more issues internal to the receiver to the transmitter or an indication of the capability to communicate whether data frames failed due to one or more issues internal to the receiver. The parameters may either be accepted or renegotiated by the transmitter. Additionally or alternatively, exchange RIE related information (e.g., an indication of capability to distinguish between RIE and MRE and/or a configuration for the communication of RIE) between the transmitter and receiver may be performed using any element (e.g., protocol, data element, bit, octet, hardware component, etc.) defined within a standard (e.g., WiFi Alliance standards, IEEE 802.11 standards, etc.) or any vendor-specific or proprietary element.

After the BA session is established, the transmitter may begin sending blocks of data frames and the receiver may acknowledge those data frames under the policy set up in the operation 402. The transmitter may transmit a block of data frames according to the BA agreement in operation 404 while in parallel, the receiver may begin receiving the block of data frames transmitted in operation 406.

In some embodiments, operation 406 includes transmitting a BA request (BAR) that causes the receiver to communicate a BA frame to the transmitter. Additionally or alternatively, the receiver may initiate a BA frame after a certain number of data frames have been received. It is contemplated that receiver operations 408-412 may be performed in parallel. For example, operations 408-412 may be performed for a first data frame or a first block of data frames, while a second data frame or a second block of data frames is being received in the operations 406. While the processing may be performed in parallel, operation 414 (e.g., transmitting the BA frame) may be performed in response to the BAR or the received number of data frames reaching a threshold. The operations 404 and 406 may, for example, be performed by the transmitter circuit 222 and the receiver circuit 214, respectively.

The flow of operations 400 may include detecting a first number of data frames that failed processing in operation 408. The flow of operations 400 may include determining a second number of data frames that failed processing due at least in part to one or more issues internal to the receiver in operation 410. The second number of data frames determined to be due to one or more internal issues may be a subset of the first number of data frames that failed processing and where detected in the operations 408. For example, the data frames may also fail processing due to medium related errors (e.g., causing the data frame to fail a cyclic redundancy check). The subset may be all of the first number of data frames, a proper subset of the first number of data frames, or the empty set (e.g., all failures were medium-related or there were no failures). The operations 408 and 410 may be performed by a wireless device 200 operating in a receiver mode. For example, the operation 408 and 410 may be performed by the error classification circuit 216. In some embodiments, the error classification circuit 216 monitors reception of data frames by the receiver circuit 214.

The operation 408 may include determining if a data frame was processed appropriately. Additionally, the operation 410 may include determining if the data frame failed processing due to RIE (e.g., any error due to one or more issues internal to the wireless device 200 either partially or fully, directly or indirectly, contributing to the failure) or whether the data frame that failed processing failed due to an MRE (e.g., errors due to channel noise, distortion, transmission distance, etc.). For example, the operation 408 may include monitoring the processing of data frames for gaps in the sequence of data frames that are successfully processed, gaps may indicate that the data frame failed processing (e.g., due to medium-related issues or internal issues).

In some embodiments, the operation 410 includes performing a parity bit check, a cyclic redundancy check (CRC), or any other mechanism for determining if the data was received without changes (e.g., due to channel interference or medium distortion). Failure of a fidelity check may be indicative of a medium-related failure. The operation 410 may include associating processing failures for data frames that were received and passed the fidelity check with internal issues. For example, the operation 410 may compare gaps in successfully processed data frames with data frames that were either not received or failed a fidelity check to determine if the processing failure is related to an internal cause. Data frames may fail internally due to a number of reasons including but not limited to priority of in-device coexistence with Bluetooth (BT) and/or in-device concurrent role (e.g., peer-to-peer (P2P) communications); processing delays; insufficient receive buffer size; and/or unavailability of any shared hardware resources; etc. In some embodiments, the operation 410 includes further dividing the issues causing the processing failure. For example, the specific type of internal failure may be determined (e.g., as described with reference to the error classification circuit 216). Additionally or alternatively, the operation 410 may also classify different types of MRE. Advantageously, determining the type of error allows more appropriate corrective actions to be taken.

The flow of operations 400 may include generating an indication of the second number of data frames that failed processing due to one or more issues internal to the receiver in operation 412. For example, the error indication circuit 218 may perform the operation 412 by generating data fields to be included in a block acknowledgment frame. Generating the indication in the operation 412 may use the results of the operations 408 and 410.

In some embodiments, the operation 412 includes generating a binary bit indicating that an internal failure criterion was satisfied. For example, a count of the second number of data frames determined in the operation 412 may be compared to a threshold number of RIE failures. Additionally or alternatively, evaluating the internal failure criterion may include comparing an internal failure fraction (or ratio) of the first number of data frames detected in the operation 408 that are also in the second number of data frames determined to have failed processing due to one or more internal issues in the operation 412 to a threshold fraction (or ratio).

In some embodiments, the operation 412 includes generating a binary encoded number (e.g., using a fixed-point or floating-point representation) representing the number of RIE related failures and/or the fraction of detected failures that were determined to have internal causes. The number or fraction of internal failures generated in operation 412 may be later transmitted to the transmitting device for processing. In some embodiments, the operation 412 includes generating an indication of the last sequence number that failed processing due to causes related to any of the internal issues. For example, the operation 412 may include generating a data field with the sequence number of the last data frame to fail processing due to an internal issue. Alternatively, the operation 412 may indicate the sequence number of the last data frame that did not fail due to internal cause. In some embodiments, the operation 412 may include generating a bitmap related to the data frames that failed due to one or more internal issues.

The operation 412 may include generating the indication within a BA frame. For example, a single binary bit indicating whether a threshold fraction of the errors has one or more internal issues may be included in a bit of a control field for a BA frame. For example, the binary bit may be placed in the sixth bit 302 of the control field 300 as shown in FIG. 3A. A bitmap indicating the specific data frames that failed due to internal issues or the last sequence number that failed due to internal issues may be included in the BA frame. For example, such information may be included in the BA frame 340 or the multi-station BA frame 360 as described with reference to FIGS. 3B and 3C.

The flow of operations 400 may include transmitting the indication to the transmitter in operation 414. For example, after the BA frame has been generated the transmitter circuit 222 may perform the operation 414 by communicating the BA frame to the transmitter. In operation 416, the transmitter may receive the indication from the receiver, for example, in the BA frame.

After receiving the indication in the operation 416, a wireless device 200 operating in a transmitter mode may perform actions to mitigate the occurrence of processing failures (e.g., internal and/or medium-related). For example, the countermeasure circuit 224 may perform operations 418 and/or operation 420 in order to mitigate the occurrence of processing failures.

In some embodiments, the flow of operations 400 includes adjusting one or more transmission parameters to mitigate internal errors in response to the second number of data frames that failed processing due to one or more issues internal to the receiver satisfying a first criterion in the operation 418. The determination of the first criterion may be performed either by the receiver and communicated to the transmitter or performed by the transmitter. For example, any of the criteria described with reference to the countermeasure circuit 224 may be evaluated in the operation 418 to determine if an action to mitigate internal errors should be performed. The operation 418 may include adjusting the size of a data packet, for example, by limiting the size of a data unit (e.g. MAC protocol data unit, MPDU, or MAC service data unit MSDU) or the number of data units that can be aggregated (e.g., a size of the aggregation of data units); transmitting using a different resource unit; transmitting using a different modulation and coding scheme; and adjusting the number of spatial streams. In some embodiments, the transmitter may not perform these actions; however, the operation 418 may advantageously prevent the transmitter from performing an action that will have little or no effect on the RIE. For example, the operation 418 may prevent the transmitter from increasing transmission power and incurring the associated power cost and/or degradation to components used to transmit the signal.

In some embodiments, the flow of operations 400 includes adjusting one or more transmission parameters to mitigate channel errors responsive to the first number of data frames that failed processing satisfying a second criterion and the second number of data frames failing to satisfy the first criterion in the operation 420. The data frames that failed processing satisfying a second criterion may indicate that the cause of errors is severe enough that taking action may be appropriate. Because the second number of data frames that failed due to internal issues does not satisfy the first criterion, the most appropriate action may be to attempt to mitigate medium-related (e.g., channel-related) errors. The operation 420 may include adjusting the transmission rate and/or increasing transmission power in order to improve the fidelity of the received signal.

### Configuration of Exemplary Embodiments

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The construction and arrangement of the systems and methods as shown in the various exemplary embodiments are illustrative only. Although only a few embodiments have been described in detail in this disclosure, many modifications are possible (e.g., variations in port or destination quantity, data types, methods of reinsertion, reintroduction, etc., values of parameters, arrangements, etc.). For example, the position of elements may be reversed or otherwise varied, the connections between elements may be direct or indirect, such that there may be one or more intermediate elements connected in between, and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions, and arrangement of the exemplary embodiments without departing from the scope of the present disclosure. For example, the embodiments of the present disclosure may be implemented by a single device and/or system or implemented by a combination of separate devices and/or systems.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (i.e., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps, and decision steps.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer (i.e., ASICs or FPGAs) or any other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

## Claims

1. A first device comprising one or more circuits configured to perform operations comprising:
detecting one or more data frames, received from a second device, failed processing;
generating a data field indicating at least one of the one or more data frames failed processing due at least in part to one or more issues internal to the first device; and
transmitting the data field to the second device.

2. The first device of claim 1, wherein
the operations further comprise communicating an action to the second device, the action identified to mitigate the one or more issues internal to the first device;
wherein in particular
the action is based at least upon a type of the one or more issues internal to the first device.

3. The first device of claim 2, wherein
communicating the action to the second device is responsive to determining at least one of the one or more data frames failed processing due at least in part to one or more issues internal to the first device, and wherein the action is at least one of:
a request to adjust a size of data frames communicated to the first device;
a request to adjust a size of data frame aggregations communicated to the first device;
a request to adjust a modulation and coding scheme used to communicate the data frames to the first device;
a request to adjust a resource unit used to communicate the data frames to the first device; or
a request to adjust a number of spatial streams used to communicate the data frames to the first device.

4. The first device of any one of the claims 1 to 3, wherein
the data field is transmitted within a block acknowledgement frame.

5. The first device of any one of the claims 1 to 4, wherein
the operations further comprise at least one of:
transmitting an indication of capability to communicate whether the one or more data frames failed processing due at least in part to the one or more issues internal to the first device; or
receiving an indication the second device is configured to perform an action responsive to the one or more data frames failing processing due at least in part to the one or more issues internal to the first device.

6. The first device of any one of the claims 1 to 5, wherein
the data field comprises an identification of a received data frame that did not fail due at least in part to the one or more issues internal to the first device;
wherein in particular
the identification is a binary representation of a sequence number of a most recent received data frame that did not fail due at least in part to the one or more issues internal to the first device.

7. The first device of any one of the claims 1 to 6, wherein
the data field comprises a sequence corresponding to a plurality of received data frames including the one or more data frames that failed processing, the sequence indicating for each received data frame of the plurality of received data frames whether the received data frame failed processing due at least in part to the one or more issues internal to the first device; wherein in particular
the sequence comprises a binary symbol for each data frame of the plurality of received data frames.

8. The first device of any one of the claims 1 to 7, wherein
the data field is a binary bit within a control field for a block acknowledgement frame; wherein in particular
the one or more data frames that failed processing are one or more first data frames and include one or more second data frames that failed processing due at least in part to the one or more issues internal to the first device, and
the binary bit indicates whether a ratio of the one or more second data frames to the one or more first data frames exceeds an internal failure threshold.

9. The first device of any one of the claims 1 to 8, wherein
the data field indicates the one or more issues contributed either directly or indirectly to the failed processing.

10. A first device comprising one or more circuits configured to perform operations comprising:
transmitting a plurality of data frames to a second device;
receiving a first indication that one or more failed data frames of the plurality of data frames failed to be processed by the second device;
receiving a second indication that at least a subset of the one or more failed data frames failed to be processed due at least in part to one or more issues internal to the second device; and
adjusting one or more parameters for transmitting data frames responsive to the subset of the one or more failed data frames satisfying a criterion.

11. The first device of claim 10, wherein
the operations further comprise receiving, from the second device, an indication that the one or more failed data frames satisfied the criterion.

12. The first device of claim 10 or 11, wherein
the one or more parameters comprising at least one of:
a size of the data frames communicated to the second device;
a size of data frame aggregations communicated to the second device;
a modulation and coding scheme used to communicate the data frames to the second device;
a resource unit used to communicate the data frames to the second device; or
a number of spatial streams used to communicate the data frames to the second device.

13. The first device of any one of the claims 10 to 12, wherein
the first indication and the second indication are received within a block acknowledgement frame;
and/or wherein
the second indication comprises at least one of:
an indication of a received data frame that did not fail due at least in part to the one or more issues internal to the second device;
an indication for each received data frame of the plurality of data frames whether the received data frame failed processing due at least in part to the one or more issues internal to the second device; or
a binary bit within a control field for a block acknowledgement frame.

14. The first device of any one of the claims 10 to 13, wherein
the criterion is a first criterion and the operations further comprise performing an action for mitigating medium related errors responsive to the one or more failed data frames satisfying a second criterion and the subset failing to satisfy the first criterion.

15. A device comprising one or more circuits configured to perform operations comprising:
performing receiver mode operations comprising:
determining one or more received data frames failed processing;
determining a first fraction of the one or more received data frames that failed processing due at least in part to one or more issues internal to the device; and
transmitting, in a control field of a block acknowledgement frame, an indication that the first fraction is greater than a threshold; and
performing transmitter mode operations comprising:
receiving the indication that a second fraction of one or more transmitted data frames that failed to be processed by a receiving device, failed due at least in part to one or more issues internal to the receiving device; and
adjusting one or more parameters for transmitting data frames responsive to the indication.
